# EUROPEAN PATENT SPECIFICATION

(11) **EP 2 749 682 B1**
(45) Date of publication and mention of the grant of the patent: **05.08.2015**
(21) Application number: 12199455.2
(22) Date of filing: 27.12.2012
(51) Int. Cl.: D06F 25/00, D06F 58/20, A47L 15/48, A47L 15/00, A47L 15/42

(54) **Washing-dryer machine**
Wäschetrockner
Machine à laver et sèche-linge

(43) Date of publication of application: 02.07.2014
(73) Proprietor: Electrolux Home Products Corporation N.V., 1130 Brussels (BE)
(72) Inventor: Cavarretta, Francesco, 33080 Porcia (PN) (IT); Vignocchi, Massimiliano, 33080 Porcia (PN) (IT)
(74) Representative: Nardoni, Andrea

(56) References cited:
- EP-A1- 2 471 434
- DE-A1- 4 216 106
- US-A1- 2009 223 077

## Description

The present invention relates to a household appliance for washing and drying goods, in particular to a laundry washing-dryer machine for washing clothes. Furthermore the present invention relates to a method of washing and drying goods in a washing-dryer machine.

Washing-dryer machines are widely available on the market. The main advantage of these household appliances is that the same machine can work as a washing-dryer machine and as a condense dryer, with great saving of space (one machine instead of two) and of money (the cost of a washing-dryer machine is usually lower than the sum of costs of a washing-dryer machine and a condense dryer) for consumers.

In particular, washing-dryer machines carry out a washing phase and a drying phase of goods, such as laundry, contained in a processing chamber. In the present description and in the following claims, expression "washing phase" is broadly used to encompass the entire treatment cycle typical of a washing-dryer machine, namely to encompass, besides one or more washing cycles, one or more pre-washing cycle(s), rinsing cycle(s), spinning cycle(s). Usually, the drying phase immediately follows the washing phase.

In a known washing-dryer machine, as far as the washing phase is concerned it is known to use an electric heater to heat water for use in a washing chamber, called process water hereinafter.

In order to save energy consumption, it is also known to use a heat pump in place of or besides the electric heater for heating the process water during the washing phase.

To improve efficiency of the washing heat pump and to avoid cooling down the ambient air is also known, e.g. from EP 2 096 203 A1**,** EP 2 096 203 A1**,** EP 2 206 824 A2**,** and EP 2 471 434 A1 to use a tank adapted to contain water or another fluid as a heat source for the washing heat pump, to be cooled down/solidified during heating of the process water.

More specifically the washing heat pump comprises a first heat exchanger and a second heat exchanger part of a circuit comprising a refrigerant, the first heat exchanger being adapted to cool said refrigerant and to heat water to be used in the chamber, the second heat exchanger being adapted to heat said refrigerant and to cool/solidify (to ice in the case of water) the fluid contained in the tank.

During operation of the heat pump, the fluid in the tank is cooled down with respect to a starting temperature and, optionally, at least partially solidified (iced in the case of water). The cooled/iced fluid needs to be regenerated, that is warmed up again towards the starting temperature, in order to be used again for a next, optionally immediately subsequent, process cycle. In case of ice generation, it is preferable that all the ice is melted before the next process cycle is started.

EP 2 096 203 A1 discloses a household washing-dryer machine comprising a drum, a heater and a container. The container contains waste water (i.e. used process water) of a previous process phase (e.g., washing or rinsing phase). The household washing-dryer machine also comprises a heat pump comprising an evaporator thermally coupled to the container, a condenser, a compressor and an expansion valve. A heat pump medium is pumped from the compressor to the condenser, where liquefaction takes place accompanied by release of heat. The released heat is used to warm process water contained in the tub. From the condenser the medium passes via the expansion valve to the evaporator where the medium evaporates whilst absorbing heat from the waste water contained in the container. From the evaporator the medium runs back to the compressor. At the end of each process phase, the waste water is drained away from the tub into a waste water line via the container wherein the cooled waste water is replaced. To prevent or reduce any deposition or sedimentation of dirt from the waste water in the container, means for agitating or pumping the waste water may be provided in the container, such as a circulation pump by which water is removed at one location of the container and fed to another location again.

EP 2 224 049 A1 discloses a cleaning device comprising a tub, a waste water tank for intermediate storage of waste water from the tub, a heat pump for extracting heat from the waste water tank and supplying it to process water in the tub, and a controller configured to partially freeze the waste water in the waste water tank and to melt at least part of the ice located in the waste water tank by supplying process water from the tub towards the end of a washing process.

EP 2 206 824 A2 discloses a household appliance comprising a tub, a tank filled with fluid and a heat pump for extracting heat from the fluid contained in the tank and supplying the heat to the tub. The tank is a closed tank whose content is not changed within the framework of the normal process carried out by the household appliance. EP 2 206 824 A2 states that a heat exchanger can be provided between a waste water line and the tank in order to transfer heat from the waste water into the fluid tank and that in addition to this, other types of waste heat of the appliance can also be supplied to the fluid in the tank, for example the tank can also be coupled to an electrical consumer by means of a passive heat exchanger, a ventilation device or a heat pump. In order to improve the heat exchange, means for agitating or pumping the fluid can be further provided on the tank.

In a known washing-dryer machine, as far as the drying phase is concerned an air heating element and an air cooling/dehumidifier element are provided. Process air is circulated in a closed loop, wherein it is heated up by the air heating element, it passes through the chamber containing the clothes or other goods to be dried so as to absorb the humidity therefrom, and the (wet) process air is cooled/dehumidified by the air cooling/dehumidifier element.

As far as the above elements are concerned, several solutions are known, among which:
- in air to air condense dryers, the process air is heated up by an electrical heater and it is cooled/dehumidified by the ambient air in an air to air heat exchanger;
- in water to air condense dryers, the process air is heated up by an electrical heater and it is cooled/dehumidified by tap water in an air to water heat exchanger;
- in a heat pump condense dryer, the process air is heated up in a condenser of a heat pump and it is cooled/dehumidified in an evaporator of the heat pump.

EP 2 471 434 A1 discloses to use the tank -or a heat exchanger coupled thereto-, that as said above is used as a cold source for the heat pump used in the washing phase, also as the cooling/dehumidifier element used in the drying phase.

The Applicant recognised that using that tank as the cooling/dehumidifier element is subject to several limitations. The cold stored in the tank during the washing phase would hardly suffice and/or last enough to complete the drying of the laundry. Moreover, its cooling/dehumidifier power depends on the washing phase, and is not controllable.

It is an object of the invention to provide a washing-dryer machine with enhanced performance.

It is another object of the invention to provide an improved washing-dryer machine that has improved design and construction.

The Applicant found that the above objects are achieved by providing a pre-cooling/pre-dehumidification of the process air exploiting the cool that is stored at the fluid tank during the precedent washing phase.

This provision allows a substantial energy saving because the stored cool (in the form of cooled water and/or ice available for melting, for example) at the fluid tank is an end product of the washing phase, which is freely available during the drying phase.

By lowering the temperature of the process air reaching the air cooling/dehumidifier element, the energy consumption required by the latter as well as the time required for completing the drying phase may be considerably reduced. The drying phase may however be completed irrespectively of the amount of cool thermal energy available at the tank, because it does not rely on the tank only. During the drying phase, the contents of the tank is also in turn regenerated, rendering it available as thermal energy source for a subsequent washing phase.

The above mentioned pre-cooling/pre-dehumidification of the process air exploiting the cool that is stored at the tank during the precedent washing phase is obtained, according to the invention, by either inserting the tank directly in the process air flow just before or upstream of the cooling/dehumidifier element, or by providing a heat exchanger in the process air flow just before or upstream of the cooling/dehumidifier element, the heat exchanger being thermally connected with the tank.

Thus, a heat exchange takes place between process air and the fluid in the tank, absorbing heat from the process air and releasing it at the tank. The heat exchanger, where provided for, is preferably in fluid connection with the tank, so that the same medium as that one contained in the tank itself is used for the heat exchange. As an alternative, the heat exchange can take place through a further fluid in thermal connection with the tank, distinct from the fluid contained in the tank, for example by providing the tank with a coil for the further fluid to circulate between the tank and the heat exchanger arranged in the air process flow for use in the drying phase.

Accordingly, in a first aspect the present invention relates to a washing-dryer machine comprising:
- a chamber for receiving goods to be washed and dried,
- a tank adapted to contain a fluid,
- a washing heat pump comprising a refrigerant, wherein the washing heat pump during a washing phase of the washing-drier machine is adapted to cool said refrigerant and to heat water to be used in the chamber, and to heat said refrigerant and to cool the fluid contained in the tank,
- an air cooling/dehumidifier element, wherein said air cooling/dehumidifier element during a drying phase of the washing-dryer machine is adapted to cool/dehumidify process air downstream of the chamber,
**characterized in that** said tank or a heat exchanger thermally connected with said tank is arranged downstream of said chamber and upstream of said air cooling/dehumidifier element, so as to pre-cool/pre-dehumidify process air which exits from the chamber before the pre-cooled/pre-dehumidified process air is introduced into said air cooling/dehumidifier element.

In embodiments, said tank is directly inserted within the process air flow, in particular within a duct wherein the process air flows.

Advantageously, said tank has corrugated walls and/or fins protruding from the walls, possibly having corrugated surfaces.

In other embodiments, a heat exchanger, preferably an air to liquid heat exchanger, is inserted within the process air flow, in particular within a duct wherein the process air flows, and a fluid is circulated between said heat exchanger and said tank.

Advantageously, said circulated fluid is the fluid contained within tank.

As an alternative, the circulated fluid may be a further fluid flowing in a coil within the tank.

Advantageously, the washing-dryer machine further comprises circulation means for circulating said fluid, such as a pump.

Advantageously, said heat exchanger is a finned coil heat exchanger.

Advantageously, the washing-dryer machine further comprises an air heating element adapted to heat process air upstream of said chamber.

The air heating element is advantageously arranged downstream of said air cooling/dehumidifier element.

In embodiments, said air cooling/dehumidifier element is an air to air heat exchanger or a water to air heat exchanger configured to cool/dehumidify the process air and to heat ambient air or tap water, respectively.

Typically, in said embodiments said air heating element is an electric heater.

In other embodiments, said air cooling/dehumidifier element and said air heating element are heat exchangers part of a dryer heat pump.

Advantageously, said washing heat pump and said dryer heat pump share at least one component, in particular the compressor, and possibly the pressure lowering device and/or one heat exchanger.

Advantageously, the washing-dryer machine further comprises a control unit configured to control said circulating means based on one or more of the following criteria:
a) switching said circulating means on/off based on the process air temperature, preferably at the inlet of the chamber, more preferably switching it on if the air at the inlet of chamber raises over a first preselected threshold and switching it off if it falls below a second preselected threshold lower than the first preselected threshold;
b) switching said circulating means on/off based on the temperature of the water or other fluid within tank, preferably switching it off when that temperature has reached a value too high to further contribute to the condensation of the humidity of the process air flow;
c) switching said circulating means on/off based on the difference between the temperature of the process air at the outlet of the chamber and the temperature of the fluid circulated by said circulating means, the latter being preferably measured in the tank or at the inlet of said heat exchanger, more preferably switching it off if the difference of temperature falls below a predetermined threshold;
d) switching said circulating means on during operation of the washing heat pump, in order to move the fluid in the tank and so increase the heat transfer coefficient;
e) in case of a heat pump condense dryer, switching said circulating means off in a first part of the drying phase, until the dryer heat pump has completed a warm-up phase or transient condition, and after a proper operation time of the dryer heat pump and when eventually the dryer heat pump is operating at full speed, then switching said circulating means on;
f) in case of a washing-dryer machine using a heat pump condense, switching said circulating means on/off based on the refrigerant temperature, preferably at the outlet of the condenser, more preferably switching it on if the refrigerant at the outlet of condenser raises over a first predetermined threshold, and switching it off if it falls below a second predetermined threshold lower than said first predetermined threshold;
g) in case of a washing-dryer machine using an electric heating element, switching said circulating means on at the beginning of the drying phase;
h) in case of a washing-dryer machine using an electric heating element, switching said circulating means off when the power of the electric heating element is reduced.

The washing heat pump typically comprises a first heat exchanger, a second heat exchanger, a compressor and optionally a pressure lowering device, forming a circuit comprising a refrigerant, the first heat exchanger being adapted to cool said refrigerant and to heat water to be used in the chamber, the second heat exchanger being adapted to heat said refrigerant and to cool the fluid contained in the tank.

In the washing-dryer machine according to the invention, the tank may be a closed tank whose content is not changed within the framework of the normal process carried out by the washing-dryer machine.

Alternatively, the tank may be an open tank, connected to the washing chamber to receive waste water.

Advantageously, however, similarly to the washing-dryer machine of European patent application 12178490.4 still secret at the date of first filing of the present application, the tank is an open tank directly fluidly connected to the water mains, that is by means of a conduit that bypasses the chamber, what enables to regenerate cooled/iced fluid in the tank by replacement with clean tap water also during operation of the washing heat pump by using waste water coming from said process cycle.

The regeneration of the fluid within the tank may take place during an initial part only of the washing phase if a drying phase is programmed after the washing phase, or during the entire washing phase if a drying phase is not programmed, so that the washing-dryer machine is ready for an even immediately subsequent second washing phase.

Preferably, the overall regeneration of the fluid within the tank takes place during the drying phase, by precooling/pre-dehumidifing the precess air.

Regarding the components of the washing-dryer machine involved in a washing phase, the following provisions apply.

The second heat exchanger of the washing heat pump is advantageously thermally coupled to the tank.

In an embodiment, the second heat exchanger can be arranged within the tank.

In a preferred embodiment, the first heat exchanger comprises a tube arrangement adapted to deliver heat.

In a preferred embodiment, the second heat exchanger comprises a tube arrangement adapted to aborb heat.

In an embodiment, the refrigerant is adapted to condense inside the first heat exchanger and to evaporate inside the second heat exchanger.

In this embodiment, the first heat exchanger is a condenser and the second heat exchanger is an evaporator.

In another embodiment, the refrigerant operates nonconventional cycles, as for instance carbon dioxide, and does not undergo a phase change (i.e., condensation and evaporation) in the first heat exchanger and second heat exchanger.

The refrigerant is advantageously circulated through said circuit of the washing heat pump.

Suitably, said circuit of the washing heat pump is a closed recirculation circuit.

The first heat exchanger is advantageously thermally coupled to the water to be used in the chamber.

In an embodiment, the first heat exchanger is thermally coupled to the chamber. For example, the first heat exchanger can be arranged inside the chamber, preferably at the bottom of the chamber.

In another embodiment, the first heat exchanger is thermally coupled to a water circuit conducting the water into the chamber.

In an embodiment, the water circuit is a recirculation circuit adapted to drain water from the chamber and to return it back into the chamber at another location. Suitably, the recirculation circuit comprises a pump and a pipe arrangement. In this embodiment, the first heat exchanger can be thermally connected to the pump and/or the pipe arrangement. This solution enables to recirculate the water through the recirculation circuit, which is thermally coupled to the first heat exchanger, till a desired process temperature is reached.

In another embodiment, the first heat exchanger is thermally coupled to a water circuit adapted to draw water directly from the water mains, bypassing the chamber, and to deliver it into the chamber (without recirculation). In this embodiment, tap water from water mains is heated by the first heat exchanger before entering the chamber. The first heat exchanger thus operates only on contact with tap water.

Advantageously, the tank has an input fluidly connected to the water mains by means of said conduit.

Suitably, the washing-dryer machine comprises a water outlet circuit for discharging waste water (i.e. used water) from the chamber. The water outlet circuit is advantageously fluidly connected to the bottom of the chamber.

The water outlet circuit can comprise a draining pump and draining pipes, adapted for discharging waste water from the chamber after process cycles (e.g. washing, rinsing cycles).

Advantageously, the tank has an output for draining away at least part of cooled fluid from the tank.

Advantageously, the output of the tank is fluidly connected to the water outlet circuit in order to drain away at least part of cooled fluid from the tank via the water outlet circuit.

According to another embodiment, the output of the tank is fluidly connected to a dedicated fluid outlet circuit (that is to a fluid outlet circuit free of fluid connection with the water outlet circuit).

According to an embodiment, the tank is thermally coupled to the water outlet circuit (e.g. to said draining pump and/or to said draining pipes). This advantageously enables to transfer heat from the waste water flowing through the water outlet circuit to the fluid contained in the tank thereby improving regeneration of the cooled/iced fluid in the tank. The thermal coupling can be achieved, for example, by means of a heat exchanger, as for example by placing the draining pipes in contact with the tank.

As said, the washing-dryer machine suitably comprises a control unit. The control unit is advantageously configured in order to control operation of the washing-dryer machine.

The control unit is advantageously configured to i.a. manage regeneration of the fluid in the tank, cooled/iced during operation of the heat pump. Suitably, the control unit is configured to manage entry of tap water from the water mains into the tank and exit of at least part of the water cooled by the second heat exchanger. This, with the purpose of melting any ice formation in the tank and at least partially replacing cooled water in the tank with tap water at a higher temperature.

In addition or in alternative, the control unit can be configured to manage cooled/iced fluid regeneration in the tank so that cooled/iced fluid regeneration is performed when the washing heat pump is switched off, and preferably when no drying phase is programmed.

In a preferred embodiment, the control unit is configured to operate the washing heat pump so that the fluid in the tank is at least partially freezed. In this way, the latent heat of the phase transition from fluid to solid is advantageously used and the washing heat pump efficiency is improved. Moreover, more cold is available for the subsequent drying phase.

In an aspect, the invention relates to a method of operating a washing-dryer machine comprising a chamber for receiving goods to be washed and dried, a tank adapted to contain a fluid, and a washing heat pump (typically comprising a first heat exchanger, a second heat exchanger, a compressor and a pressure lowering device forming a circuit) comprising a refrigerant, the method comprising:
- a washing phase comprising a step of operating the washing heat pump so as to cool said refrigerant and to heat water to be used in the chamber (by means of said first heat exchanger), and to heat said refrigerant and to cool/solidify the fluid contained in the tank (by means of the second heat exchanger), and
- a subsequent drying phase comprising the steps of absorbing water vapour from the chamber through a process air flow, and cooling/dehumidifying the process air flow downstream of the chamber,
wherein the drying phase further comprises a step of pre-cooling/pre-dehumidifying the process air flow after said step of absorbing and before said step of cooling/dehumidifying, wherein said step of pre-cooling/pre-dehumidifying the process air flow comprises thermally connecting it with said tank.

Advantageously said drying phase further comprises a step of heating a process air flow and inputting the heated process air flow into said chamber.

Advantageously said step of thermally connecting the process air flow with said tank comprises the steps of providing a heat exchanger within the path of said process air flow, and circulating the fluid between the tank and a heat exchanger.

Advantageously, the method further comprises the steps of controlling the fluid flow or the fluid flow rate in said step of circulating, according to one or more of the following criteria:
a) switching the fluid flow on/off based on the process air temperature, preferably at the inlet of the chamber, more preferably switching it on if the air at the inlet of chamber 10 raises over a first preselected threshold and switching it off if it falls below a second preselected threshold lower than the first preselected threshold;
b) switching the fluid flow on/off based on the temperature of the water or other fluid within tank, preferably switching it off when that temperature has reached a value too high to further contribute to the condensation of the humidity of the process air flow;
c) switching the fluid flow on/off based on the difference between the temperature of the process air at the outlet of the chamber and the temperature of the fluid flow, the latter being preferably measured in the tank or at the inlet of said heat exchanger, more preferably switching it off if the difference of temperature falls below a predetermined threshold;
d) switching the fluid flow on during operation of the washing heat pump, in order to move the fluid in the tank and so increase the heat transfer coefficient;
e) in case of a heat pump condense dryer, switching the fluid flow off in a first part of the drying phase, until the dryer heat pump has completed a warm-up phase or transient condition, and after a proper operation time of the dryer heat pump and when eventually the dryer heat pump is operating at full speed, then switching the fluid flow on;
f) in case of a washing-dryer machine using a heat pump condense, switching the fluid flow on/off based on the refrigerant temperature, preferably at the outlet of the condenser, more preferably switching it on if the refrigerant at the outlet of condenser raises over a first predetermined threshold, and switching it off if it falls below a second predetermined threshold lower than said first predetermined threshold;
g) in case of a washing-dryer machine using an electric heating element, switching the fluid flow on at the beginning of the drying phase;
h) in case of a washing-dryer machine using an electric heating element, switching the fluid flow off when the power of the electric heating element is reduced.

Advantageously, the method further comprises a step of regenerating the fluid contained in the tank.

Advantageously, regenerating the fluid contained in the tank comprises draining away at least part of the cooled fluid. Draining away at least part of the cooled fluid from the tank can be performed when tap water is supplied to the tank from water mains. According to another embodiment, draining away at least part of the cooled fluid from the tank can be performed when the fluid level in the tank reaches a predetermined value.

Suitably, operating the washing heat pump and/or the drying heat pump is performed by switching the compressor on.

Suitably, the washing and/or the drying heat pump (that is, the compressor) is switched off at the end of an operation cycle of the washing and/or the drying heat pump.

Suitably, the washing and/or the drying heat pump (that is, the compressor) is operated (that is, switched-on) again for performing another operation cycle of the washing and/or the drying heat pump.

Advantageously, the washing and/or the drying heat pump is operated till a desired temperature is reached for the water or respectively the air to be used in the chamber. Thereafter, the washing and/or the drying heat pump (that is, the compressor) is switched off.

According to an embodiment, the washing and/or the washing heat pump is operated till the fluid in the tank reaches a predetermined condition (for example a predetermined degree of ice formation in the tank during a washing phase and a predetermined temperature during a drying phase). Thereafter, the washing and/or the drying heat pump (that is, the compressor) is switched off.

In this connection it is observed that ice formation in the tank can be reduced and the washing heat pump operation times can be increased by performing fluid regeneration while the washing heat pump is switched on.

According to an embodiment, the washing and/or the drying heat pump is operated for a predetermined operation time. Thereafter, the washing and/or the drying heat pump (that is, the compressor) is switched off.

Advantageously, the washing and/or the drying heat pump is operated till a first one of at least two of the above conditions (desired temperature reached for the water or air to be used in the chamber, predetermined condition reached for the fluid in the tank, and end of predetermined operation time) is met.

In a preferred embodiment, regeneration of the fluid is performed while operating the washing heat pump, that is while the compressor is switched-on. Regeneration of the fluid during operation of the washing heat pump can be carried out once or more times during a same operation cycle of the washing heat pump.

In addition or in alternative, regeneration of the fluid can be performed while the washing heat pump is switched off, that is while the compressor is switched-off, for example during laundry rinsing, laundry spinning or laundry washing (in the latter case, after the desired temperature is reached for the water to be used in the chamber).

As said, the regeneration of the fluid may take place during an initial part only of the washing phase if a drying phase is programmed after the washing phase, or during the entire washing phase if a drying phase is not programmed, so that the washing-dryer machine is ready for an even immediately subsequent second washing phase. Preferably, the overall regeneration of the fluid within the tank takes place during the drying phase, by precooling/pre-dehumidifing the precess air.

Features and advantages of the present invention will be more readily understood from the following detailed description of some preferred embodiments thereof, which is provided below by way of non-limiting example with reference to the accompanying drawings, wherein:
- FIG. 1 diagrammatically shows the principle of operation of the dryer part of a washing-dryer machine according to the prior art;
- FIG. 2 shows an embodiment of a heat pump washing part of a washing-dryer machine;
- FIG. 3 diagrammatically shows the principle of operation of the dryer part of a washing-dryer machine according to an embodiment of the invention;
- FIG. 4 diagrammatically shows the principle of operation of the dryer part of a washing-dryer machine according to another embodiment of the invention;
- FIG. 5 shows an embodiment of a dryer part of a washing-dryer machine according to the invention; and
- FIG. 6 shows another embodiment of a dryer part of a washing-dryer machine according to the invention.

Like elements are denoted by like reference signs throughout the Figures.

A washing-dryer machine treats goods (typically laundry) during a washing phase wherein the goods are washed with water and possible additives, and/or a drying phase, generally subsequent to the washing phase, wherein the goods are dried at least in part.

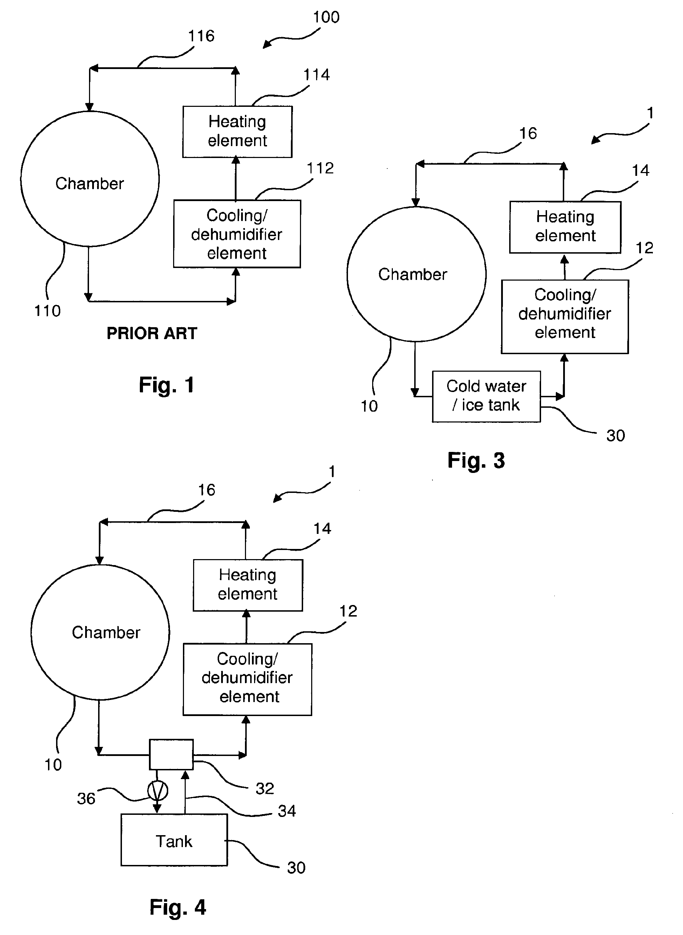

The principle of operation of the dryer part of a washing-dryer machine according to the prior art is disclosed with reference to FIG. 1, wherein the main components involved in the drying phase are diagrammatically shown.

The washing-dryer machine 100 comprises a chamber 110 for treating goods, such as laundry. The same chamber 110 is used both in the washing phase and in the drying phase.

During the drying phase, the air within chamber 110, or process air hereinbelow, is brought to an air cooling/dehumidifier element 112 adapted to cool/dehumidify it, such as a heat exchanger 112 wherein the temperature of the process air is lowered and the water vapour contained therein condenses.

To increase the capacity of absorbing humidity from the goods within chamber 110, warm process air is used, heated up by an air heating element 114 before entering in the chamber 110.

To further improve the efficiency of the drying phase, as shown in FIG. 1, a stream of air flowing in a closed loop is usually used, so that the inlet of the heating element 114 is connected to the outlet of the cooling/dehumidifier element 112. Means (not shown) for circulating the air along a circuit 116 through elements 110, 112, 114 are usually provided, such as a fan. The condensed water at heat exchanger 112 is suitably drained away.

### WASHING

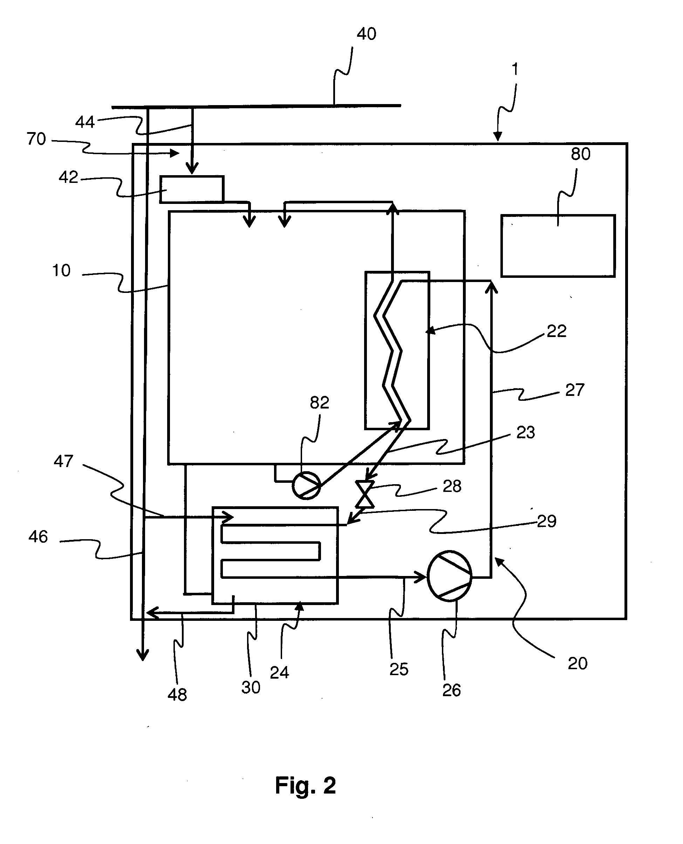

FIG. 2 shows an embodiment of the components involved in a washing phase of a washing-dryer machine 1 according to the invention, though *per se* conventional in a machine having a heat pump for heating the washing water.

Washing-dryer machine 1 comprises a chamber 10 for treating goods, a tank 30 adapted to contain a fluid or preferably a fluid/solid mixture, and a washing heat pump 20 adapted to absorb heat from the fluid contained in the tank 30 and to release heat to water to be used in the chamber 10 during a washing phase, also referred to as process water hereinafter.

The chamber 10 can be a drum, optionally perforated, which is rotatably contained in a tub (not shown).

The washing-dryer machine also comprises a water outlet circuit for discharging waste water (i.e. used water optionally mixed with washing products) from the chamber 10 after process cycles (e.g., washing, rinsing cycles).

The water outlet circuit can comprise a draining pump (not shown) and draining pipes 46.

The water outlet circuit is advantageously fluidly connected to the bottom of the chamber 10.

The washing-dryer machine 1 advantageously further comprises a water inlet circuit 70 (only diagrammatically shown) adapted to supply water, that can be optionally mixed with washing products, into the chamber 10. The water inlet circuit 70 advantageously comprises a drawer 42 and water inlet pipes 44.

The water inlet pipes 44 fluidly connect water mains 40 to the chamber 10 via the drawer 42.

The drawer 42 is adapted to be filled with products, for example detersives, softener, bleaching, sparkling/rinse aid substances, etc. The drawer 42 can comprise one or more compartments (not shown) for one or more products from which a certain amount of these products, depending on the washing program/cycle, is delivered into the chamber 10.

The tank 30 can be thermally coupled to the water outlet circuit as shown by pipe 47 in order to transfer heat from waste water flowing in circuit or pipe 46 to the fluid contained in the tank 30 for regeneration thereof. For example, thermal coupling can be achieved by placing the draining pipes 46 in contact with the tank 30.

The tank 30 can be a closed tank 30 whose content is not changed within the framework of the normal process carried out by the washing-dryer machine.

In one alternative, the tank 30 can have an input which is directly fluidly connected to public water mains 40, such as by pipe 41, in order to be able to directly receive tap water from it bypassing the chamber 10 (that is without making the tap water to pass through the chamber 10).

In another alternative, the tank 30 can have an input which is in fluid connection with waste water from the chamber 10.

In still another alternative, the tank 30 can have an input that may be selectively, such as through an electrovalve, put in fluid connection with water mains 40, put in fluid connection with waste water from the chamber 10, or be closed.

The tank 30 can have an output fluidly connected, preferably selectively, such as through an electrovalve, to the water outlet circuit 46 in order to drain away cooled/iced liquid or fluid from the tank 30 via the water outlet circuit. The output and the water outlet circuit are suitably connected through pipes, such as pipe 48.

The fluid contained in the tank 30 advantageously is tap water and/or waste process water, possibly mixed with the above mentioned products.

When the tank is a closed tank 30, the fluid contained in the tank 30 can differ from water and be, for example, glycol, which has the advantage of a low freezing point.

Alternatively, the fluid contained in the tank 30 can comprise a carrier fluid and a frost protection agent that lowers the freezing point of the mixture compared with the freezing point of the pure carrier fluid. In this way, cooling to lower temperatures can be accomplished while heat is delivered to washing heat pump 20, either to just above or to or below the freezing point.

As another alternative, the fluid contained in the tank 30 can comprise a carrier fluid and a freezing-point-increasing agent, that increases the freezing point of the mixture compared with the pure carrier fluid and thus works in more convenient thermodynamics conditions.

The tank 30 is advantageously positioned on a bottom region of the washing-dryer machine 1.

The amount of fluid contained in the tank 30 and the volume of the tank 30 depend on the amount of water that must be heated up during a washing process cycle of the washing-dryer machine 1, the temperature required for the process water, and the percentage of frozen fluid in the tank 30.

As shown in FIG. 2, the washing heat pump 20 suitably comprises a closed circuit or conduit filled with a refrigerant and comprising a heat exchanger with process water, used as a condenser 22, and a heat exchanger with the fluid within tank 30, used as an evaporator 24.

The washing heat pump 20 further comprises a compressor 26 and a pressure lowering device or lamination means 28, such as an expansion valve that may be a thermostatic or electronic valve, or a capillary tube.

During operation of the washing heat pump 20 (that is, when the compressor 26 is switched-on), heat is generated at the condenser 22, i.e. released to the process water, and cold is generated at the evaporator 24, i.e. heat is subtracted from the fluid within tank 30.

The refrigerant is pumped from the compressor 26, usually trough a connecting pipe 27, to the condenser 22, where liquefaction takes place accompanied by release of heat. The released heat is used to warm water to be used in the chamber 10. From the condenser 22 the refrigerant passes, usually trough a connecting pipe 23 and via the pressure lowering device 28, and usually trough a connecting pipe 29, to the evaporator 24 where the refrigerant evaporates whilst absorbing heat from the fluid contained in the tank 30. From the evaporator 24 the refrigerant runs back, usually trough a connecting pipe 25, to the compressor 26.

The evaporator 24 can comprise a pipe or a series of pipes properly shaped and immersed in the fluid contained in the tank 30.

The refrigerant of the washing heat pump 20 is properly selected so as to have an evaporation temperature below the solidification point of the fluid within tank 30. In the case of water being contained in tank 30, having an icing point of 0°C, the evaporation temperature of the refrigerant should be lower than 0°C, as better detailed hereinafter.

Thus, within evaporator 24, the refrigerant recovers thermal energy from the tank 30, cooling down and icing the water or other fluid contained thereinto. The thermal energy is transferred to the washing or process water via condenser 22.

Considering that during operation of the washing heat pump 20, ice (if any) is inclined to build up around the coil of evaporator 24, if the tank 30 is not a closed tank then its input and output are preferably positioned sufficiently far apart from the coil of evaporator 24 so as to prevent any obstruction of the input and output due to ice formation.

The condenser 22 can be located within the chamber 10, preferably on a bottom region thereof, or outside the chamber 10.

The condenser 22 can be a tube-in-tube heat exchanger, a plate heat exchanger or similar fluid to fluid heat exchanger. The water to be used in the chamber 10 is made to flow through the condenser 22 so that it exhanges thermal energy with the refrigerant of heat pump 20 by forced convection.

The process water can be continuously recirculated by a pump 82 through the condenser 22 and back to the chamber 10 until the desired temperature is reached. Process water is preferably drained from the chamber 10 from the bottom and returned back into the chamber 10 at another location, preferably at an upper location, via the condenser 22, as shown.

Alternatively, tap water can be heated directly, by flowing through the condenser 22, before entering into the chamber 10. In this case, pump 82 and pipes (not shown) are adapted to directly drain tap water from the water mains 40 bypassing the chamber 10, to conduct the tap water through the condenser 22 and then into the chamber 10, without recirculation, so that pump 82 is missing. In this embodiment, the condenser 22 operates without being in contact with waste water.

The washing-dryer machine 1 and especially its washing heat pump 20 may feature further provisions and/or additional components to improve the efficiency of the washing phase.

### DRYING

As said above, during the washing phase, the refrigerant within evaporator 24 recovers thermal energy from the tank 30, cooling down and possibly icing or solidifying the water or other fluid contained thereinto.

According to the invention, the cool stored within tank 30 during the washing phase is used as a cold source for process air during the drying phase.

However, tank 30 is not used as the cooling/dehumidifier element 112 of a conventional dryer circuit as that shown in FIG. 1, rather according to the invention it is used to pre-treat the process air before the cooling/dehumidifier element, namely to perform a pre-cooling/pre-dehumidifier step within the drying cycle.

In a first embodiment, the main components of washing-dryer machine 1 involved in a drying phase include, as diagrammatically shown in FIG. 3, the chamber 10 for treating goods, the tank 30 adapted to contain a fluid and used in the washing heat pump 20 as cold source during the washing phase, and a cooling/dehumidifier element 12.

In particular, the tank 30 is inserted in the process air path downstream of chamber 10 and upstream of cooling/dehumidifier element 12.

Similar to FIG. 1, a heating element 14 is preferably further provided upstream of chamber 10 and downstream of cooling/dehumidifier element 12, and/or the process air preferably circulates in a closed loop within a circuit 16.

Means (not shown) for circulating the air along circuit 16 through elements 10, 30, 12, 14 are preferably provided, such as a fan. The condensed water at cooling/dehumidifier element 12 is suitably drained away.

Heating element 14 heats up a stream of process air before it enters chamber 10; warm process air absorbs humidity from the goods within chamber 10; the air exiting chamber 10 is brought to tank 30 that acts as an air pre-cooling/pre-dehumidifier element, lowering the temperature of the process air and possibly condensing part of the water vapour contained therein; pre-treated process air is then cooled/dehumidified in cooling/dehumidifier element 12, wherein its temperature is lowered and the water vapour contained therein condenses; the thus cooled and dehumidified process air returns to heating element 14 to be warmed up again before entering chamber 10.

According to the embodiment of FIG. 3, the tank 30 is placed directly inside the process air flow, such as inside a duct or channel extending between the air outlet of chamber 10 and the process air inlet of cooling/dehumidifier element 12, forming a portion of circuit 16.

The tank 30 is properly designed so as to suitably perform as pre-cooling/pre-dehumidifier element. It is preferably designed in order to maximize the heat exchange between the water/ice or other cold mixture contained therein and the process air flowing in circuit 16.

The walls of tank 30 may be provided with fins to extend the heat exchange surface.

The walls of tank 30 and/or fins protruding therefrom may be corrugated to increase turbulence of the process air flow, thus increasing the convection coefficient and thus improving the heat exchange.

By cooling down the process air at the outlet of the goods treatment chamber 10 before it enters the cooling/dehumidifier element 12, the cooling/dehumidifier capacity of the latter, and therefore of the entire washing-dryer machine 1, is enhanced. The time required to operate the drying phase advantageously decreases.

Moreover, by exploiting the available cooling power that had been stored in the tank 30 during a previous washing phase, the energy required to operate the cooling/dehumidifier element 12 and thus the drying phase advantageously decreases.

Meanwhile, there is an advantageous regeneration of tank 30 as a heat source for a subsequent washing cycle. Indeed, while process air is cooled down during the drying phase, it releases heat to tank 30 so that any ice within tank 30 melts -more in general, any solidified fluid liquifies or any liquid evaporates-, and the water -or any other fluid within tank 30- warms up. The overall performance of washing-dryer machine 1 is therefore further increased.

In other embodiments, tank 30 is again used to pre-treat the process air before it enters the cooling/dehumidifier element 12, namely to perform a pre-cooling/pre-dehumidifier step within the drying cycle, but is not directly included in the process air flow.

Rather, a heat exchanger is provided in the process air flow just upstream of the cooling/dehumidifier element, a side of the heat exchanger being thermally connected with the tank.

Thus, a heat exchange takes place between process air and the fluid in tank 30, absorbing heat from the process air and releasing it at the tank 30. The heat exchanger 32 is preferably in fluid connection with the tank 30, so that the same medium as that contained in the tank itself is used for the heat exchange. As an alternative, the heat exchange can take place through a further fluid in thermal connection with the tank, distinct from the fluid contained in the tank, for example by providing the tank with a coil for the further fluid to circulate between the tank and the heat exchanger arranged in the air process flow for use in the drying phase.

The main components of washing-dryer machine 1 involved in a drying phase according to such an embodiment are diagrammatically shown in FIG. 4, and they include the chamber 10 for treating goods, the tank 30 adapted to contain a fluid and used in the washing heat pump 20 as cold source during the washing phase, a cooling/dehumidifier element 12, and a heat exchanger 32.

The tank 30 is thermally connected with a side of heat exchanger 32, that in turn is inserted in the process air path downstream of chamber 10 and upstream of cooling/dehumidifier element 12.

Also in this embodiment, a heating element 14 is preferably further provided upstream of chamber 10 and downstream of cooling/dehumidifier element 12, and/or the process air preferably circulates in a closed loop within a circuit 16.

Means (not shown) for circulating the air along circuit 16 through elements 10, 32, 12, 14 are preferably provided, such as a fan. The condensed water at cooling/dehumidifier element 12 is suitably drained away.

The principles of operation and advantages of the embodiment of FIG. 4 are similar to those of the above described embodiment of FIG. 3.

Heating element 14 heats up a stream of process air before it enters chamber 10; warm process air absorbs humidity from the goods within chamber 10; the (wet) air exiting chamber 10 is brought to heat exchanger 32 that acts as an air pre-cooling/pre-dehumidifier element, lowering the temperature of the process air and possibly condensing part of the water vapour contained therein; pre-treated process air is then cooled/dehumidified in cooling/dehumidifier element 12, wherein its temperature is lowered and the water vapour contained therein condenses; the thus cooled and dehumidified process air returns to heating element 14 to be warmed up again.

The heat exchanger 32 is preferably an air to water heat exchanger 32 (or in general an air to fluid heat exchanger), operating directly with the water (or other fluid) contained in tank 30.

Means for circulating the water or other fluid contained within tank 30 along a circuit 34 extending between heat exchanger 32 and tank 30 are preferably provided, such as a pump 36.

The (fluid or) water to air heat exchanger 32 is properly designed so as to suitably perform as pre-cooling/pre-dehumidifier element. It is preferably designed in order to maximize the heat exchange between the cold water or mixture flowing in circuit 34 and the process air flowing in circuit 16.

The (fluid or) water to air heat exchanger 32 can be a coil heat exchanger. It may be provided with fins to extend the heat exchange surface.

As an alternative, the heat exchange can take place through a further fluid in thermal connection with the tank, distinct from the fluid contained in the tank, for example by providing the tank with a coil for the further fluid to circulate between the tank and the heat exchanger arranged in the air process flow for use in the drying phase.

The advantages of pre-cooling/pre-dehumidifying the process air before it enters the cooling/dehumidifier element 12 are as stated in connection with FIG. 3.

The embodiment of FIG. 4, though involving more components and in a way involving a less efficient heat transfer between the process air and the contents of tank 30, is more versatile than that of FIG. 3 and thus a washing-dryer machine 1 having a dryer part according to this embodiment can overall have better performance than a washing-dryer machine 1 having a dryer part according to the embodiment of FIG. 3.

Indeed, the presence of pump 36 and/or of flow switching elements and/or flow rate control elements within circuit 34 allows the heat transfer performing the pre-cooling/pre-dehumidification to be advantageously controlled, as better disclosed later on.

In both the embodiment of FIG. 3 and the embodiment of FIG. 4, the conventional components of the dryer part of washing-dryer machine 1, namely the cooling/dehumidifier element 12 and the heating element 14, may be chosen in several ways.

In an air to air condense dryer, the process air is heated up by an electrical heater 14 and it is cooled/dehumidified by the ambient air in an air to air heat exchanger 12.

In a water to air condense dryer, the process air is heated up by an electrical heater 14 and it is cooled/dehumidified by the tap water, taken from water mains 40, in an air to water heat exchanger 12.

In a heat pump condense dryer, the process air is heated up in a condenser 14 of a dryer heat pump and it is cooled/dehumidified in an evaporator 12 of that dryer heat pump.

The dryer heat pump may share components with the washing heat pump, in particular the compressor, and possibly the pressure lowering device and/or one heat exchanger.

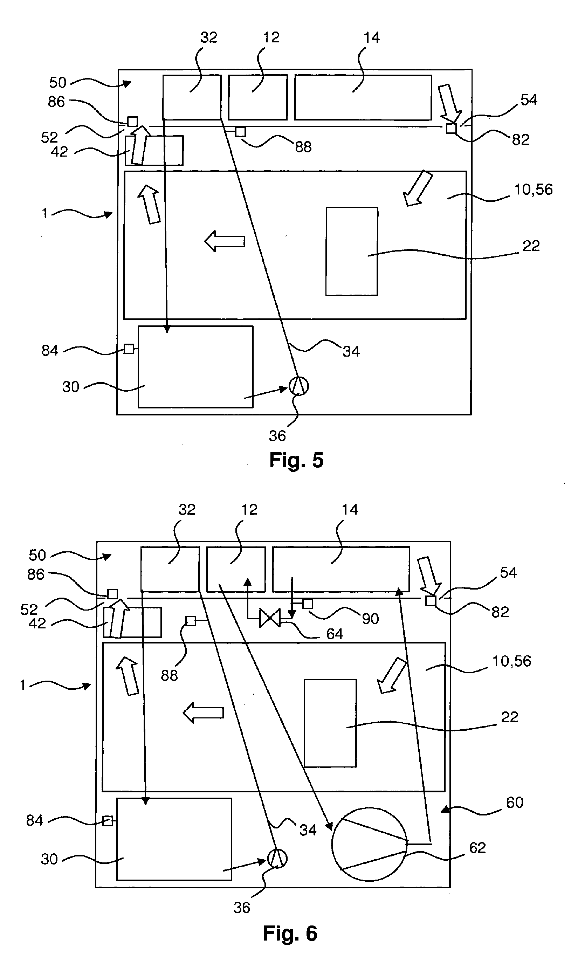

FIG. 5 diagrammatically shows an exemplary arrangement of the components involved in the drying phase of the washing-dryer machine 1 of FIG. 2, in case either the air to air condense dryer or the water to air condense dryer is used, and a heat exchanger 32 is used between the process air and the tank 30 according to FIG. 4.

A duct 50 is provided, preferably at the top of a cabinet of the washing-dryer machine 1, above chamber 10, and it has an air inlet 52 and an air outlet 54, that communicate with a tub 56 surrounding perforated drum or chamber 10, preferably at opposing sides of the tub 56.

Within duct 50, the heat exchanger 32 thermally connected to tank 30 and used as pre-cooling/pre-dehumidifying element, the air to air or water to air heat exchanger 12 used as cooling/dehumidifying element, and the electric heater 14 are arranged in succession from its air inlet 52 to its air outlet 54.

Arrows diagrammatically show the flow of the drying process air along duct 50 and across chamber 10.

Water tank 30 is preferably housed at the bottom of the washing-dryer machine 1, under chamber 10, as also shown in FIG. 2. Furthermore, condenser 22 that warms up process water (part of the washing heat pump 20), and drawer 42 are shown. The remaining components involved in the washing phase are omitted for the sake of clarity.

FIG. 6 diagrammatically shows an exemplary arrangement of the components involved in the drying phase of a washing-dryer machine 1 of FIG. 2, in case a heat pump condense dryer is used, and a heat exchanger 32 is used between the process air and the tank 30 according to FIG. 4.

Similar to FIG. 5, a duct 50 is provided preferably at the top of a cabinet of the washing-dryer machine 1, above chamber 10, and it has an air inlet 52 and an air outlet 54, that communicate with a tub 56 surrounding perforated drum or chamber 10, preferably at opposing sides of the tub 56.

Within duct 50, the heat exchanger 32 thermally connected to tank 30 and used as pre-cooling/pre-dehumidifying element, a first heat exchanger 12 performing as cooling/dehumidifier element and a second heat exchanger 14 performing as heating element are arranged in succession from its air inlet 52 to its air outlet 54.

In the case of FIG. 6, cooling/dehumidifier element or heat exchanger 12 and heating element or heat exchanger 14 are part of a heat pump 60, referred to as dryer heat pump herein.

Dryer heat pump 60 suitably comprises a closed circuit or conduit filled with a refrigerant and comprising heat exchanger 14, used as a condenser 14, that is adapted to warm up cooled and dehumidified process air, and heat exchanger 12, used as an evaporator 12, that is adapted to cool process air such that water vapour contained therein condenses.

The closed circuit of dryer heat pump 60 further comprises a compressor 62 connected between the outlet of evaporator 12 and the inlet of condenser 14, and a pressure lowering device or lamination means 64 connected between the outlet of condenser 14 and the inlet of evaporator 12. The operation of dryer heat pump 60 is similar to the operation of washing heat pump 20, and will not be described for the sake of brevity.

Compressor 62 of dryer heat pump 60 is preferably the same compressor (labelled 26 in FIG. 2) as that of washing heat pump 20.

Possibly, also other components of dryer heat pump 60 are the same as those of washing heat pump 20: pressure lowering device 64 may be the same component as pressure lowering device 28 of FIG. 2; and/or condenser 14 may also act as the process water heating component of the washing heat pump 20 (condenser 22 of FIG. 2, displaced outside of chamber 10 in this case), suitable switching or deviation means being provided.

Water tank 30 is preferably housed at the bottom of the washing-dryer machine 1, under chamber 10, as also shown in FIG. 2. Furthermore, condenser 22 that warms up process water (part of the washing heat pump 20), and drawer 42 are shown. The remaining components involved in the washing phase are omitted for the sake of clarity.

It will be understood that the physical arrangement of the various components in FIG. 5 and 6 is purely exemplary.

Those skilled in the art will also easily understand how to modify the above disclosed embodiments of FIG. 5 and 6 to perform according to the principle depicted in FIG. 3 instead of that depicted in FIG. 4.

The washing-dryer machine 1 suitably comprises a control unit 80 (FIG. 2) configured to control operation of the washing-dryer machine 1.

When the washing-dryer machine 1 is turned on in order to perform a predetermined goods treating program, the control unit 80 is advantageously configured to control the components of the washing-dryer machine 1, notably the washing heat pump 20 and process water circulation pump 82 where provided for, as well as the dryer heat pump 60, and/or the circulation means 36 (FIG. 4-6) where provided for. Control unit 80 is also configured to operate any switching device and/or flow rate controlling device, such as the various electrovalves described above.

In particular, the control unit 80 may be configured to control start/stop of tap water entry from the water mains 40 and start/stop of water exit to the water outlet circuit in order to be used as process water and/or, when water is used within tank, to perform water regeneration within tank 30 for further usage as thermal energy source, namely with the purpose of melting any ice formation in the tank 30 and replacing at least part of the cooled water with tap water at a higher temperature. This regeneration advantageously does not take place if a drying phase is to follow shortly.

Starting/stopping tap water entry into the washing-dryer machine 1 can be performed by the control unit 80 by opening/closing at least one suitable valve (not shown).

Starting/stopping water exit from the washing-dryer machine 1 can be performed by the control unit 80 by opening/closing at least one suitable valve (not shown) and switching on/off a draining pump where provided for.

Control unit 80 is configured to switch the washing heat pump 20 on any time water has to be heated for use in the chamber 10 in order to perform a process cycle (e.g., washing, rinsing, and similar) of the predetermined program.

The control unit 80 is also advantageously configured to switch the washing heat pump 20 off when the process water reaches a desired process temperature or when the fluid in the tank 30 reaches a predetermined condition (for example, when it is in large part iced).

The fluid in the tank 30 exchanges sensible heat during a cooling phase of the fluid and latent heat during a liquefying or solidifying or icing phase (if any). The exploitation of the latent heat allows reducing the amount of fluid required and therefore the overall dimensions of the tank 30. Accordingly, the control unit 80 is advantageously configured to operate the washing heat pump 20 so that the fluid in the tank 30 is at least partially freezed.

Depending on the program design, heat pump power, and wash temperature, the washing heat pump 20 alone might be insufficient to heat the water up to the desired process temperature in the available/desired time. Therefore, a conventional electrical heater (not shown) may be comprised in the washing-dryer machine 1 as well. The conventional electrical heater can be suitably positioned at the bottom of the chamber 10.

In order to guarantee that the desired process temperature is reached for the desired amount of process water, the heat exchanger 22 and the flow rate of the process water thereinto should be suitably sized. The refrigerant flowing within washing heat pump 20 should be capable of releasing the proper amount of heat at the heat exchanger 22.

The refrigerant flowing within washing heat pump 20 should therefore be capable of receiving a proper amount of heat in the remainder of the heat pump circuit. Complete evaporation of the refrigerant should also be ensured in order to safeguard the compressor 26 from damages that would possibly be caused if liquid particles of refrigerant entered thereinto.

After completion of the washing phase, control unit 80 is configured to operate the cooling/dehumidifier element 12 and the heating element 14, and any process air circulation fan of circuit 16, or other circulation means, to carry out the drying phase.

In the case of a heat pump condense drier, control unit 80 is configured to switch the drying heat pump 80 -by switching compressor 62 on- in order to perform the drying phase.

Control unit 80 is also configured to switch the drying heat pump 80 off -by switching compressor 62 off- when the process air reaches a desired low degree of humidity as measured by a suitable sensor, or after a predetermined time.

In the case of an electric heating element 14, this can be simply switched on and off by control unit 80, or possibly also its power can be controlled..

Control unit 80 may also control the flow of ambient air when this is used at cooling/dehumidifier element 12 in the case of an air to air condense dryer, such as through controlling an operating speed of a fan (not shown), or to suitably control cooling/dehumidifier element 12 in the case of a water to air condense dryer.

In case of active lamination means 28 and/or 64, e.g. when the pressure lowering device 28 and/or 64 comprises a controllable valve, this can be suitable controlled by control unit 80.

In the case of FIGs. 4-6, the control unit 80 is further configured to control, on the basis of several cycle parameters, the pump 36 or other means for recirculating the water or other fluid between tank 30 and heat exchanger 32. Pump 36 will be referred below for the sake of simplicity.

For example, in case of a heat pump condense dryer, such as that of FIG. 6, especially when the process air circuit 16 is a closed loop, then in a first part of the drying phase pump 36 is preferably switched off, until the dryer heat pump 60 has completed a warm-up phase or transient condition. Indeed, at the beginning of the drying phase, the process air might be too cold to allow full capacity operation of the heat pump 60, and while process air warms up, pre-cooling thereof at heat exchanger 32 is not desirable.

After a proper operation time of the dryer heat pump 60, then control unit 80 may switch pump 36 on, thus speeding up the process of reaching a stable working condition for the dryer heat pump 60, and, when eventually the dryer heat pump 60 is operating at full speed, increasing condensation capability at cooling/dehumidifier element or evaporator 12, and consequently reducing the drying time and allowing further energy savings. The activation of pump 36 increases the cooling power given to the process air, balancing the heating and cooling power amount provided by the heat pump system 60.

In the case of a washing-dryer machine 1 using an electric heating element 14, such as that of FIG. 5, during the drying phase the control unit 80 may conversely control pump 36 -and thus the pre-cooling/pre-dehumidification by tank 30- by switching it on at the beginning of the drying phase, because there is no transient phase.

The control unit 80 may be configured to switch pump 36 off when the power of the electric heating element 14 is reduced, in order to avoid a general reduction of the working temperature of the process air and of washing-dryer machine 1.

During the steady state working condition of the washing-dryer machines of FIGs. 5 and 6, pump 36 can, under control of control unit 80, work continuously, or according to an ON/OFF logic, or even with a controlled flow rate.

Pump 36 -and thus the pre-cooling/pre-dehumidification by tank 30- can be controlled by control unit 80 based on -e.g. so as to keep to a preselected value or within a preselected range- one or more of the following temperatures and differences of temperature, that may be estimated or averaged or measured runtime through temperature sensors as diagrammatically shown in FIGs. 5 and 6:
a) the process air temperature, preferably at the outlet 54 of duct 50, namely at the inlet of the chamber 10 (sensor 82) - for example, pump 36 can be switched on if the air at the inlet of chamber 10 raises over a predetermined threshold, e.g. 60°C, and switched off if it falls below a lower predetermined threshold, e.g. 59°C;
b) the temperature of the water or other fluid within tank 30 (sensor 84) - pump 36 is switched off when that temperature has reached a value too high to further contribute to the condensation of the humidity of the process air flow;
c) the difference between the temperature of the process air at the outlet of the chamber 10 or inlet 52 of duct 50 (sensor 86) and the temperature of the water or other fluid, measured in the tank (sensor 84) or at the inlet of the air to water heat exchanger 32 (sensor 88) - the pump 36 is switched off if the difference of temperature falls below a predetermined threshold.

In the case of a washing-dryer machine 1 using a heat pump condense, such as that of FIG. 6, during the drying phase the control unit 80 may further control pump 36 based on:
d) the refrigerant temperature, preferably at the outlet of the condenser 14 (sensor 90) - for example, pump 36 can be switched on if the refrigerant at the outlet of condenser 14 raises over a predetermined threshold, e.g. 52°C, and switched off if it falls below a lower predetermined threshold, e.g. 51°C.

In the embodiments of FIG. 5 and 6, pump 36 can also be switched on during operation of the washing heat pump 20, in order to move the fluid in the tank 30 and so increase the heat transfer coefficient.

The above disclosed embodiments are advantageously configured to carry out a method of operating a washing-dryer machine according to the invention. When the washing-dryer machine 1 comprises a chamber 10 for receiving goods to be washed and dried, a tank 30 adapted to contain a fluid, and a washing heat pump 20 (typically comprising a first heat exchanger 22, a second heat exchanger 24, a compressor 26 and possibly a pressure lowering device 28 forming a circuit) comprising a refrigerant, the method according to the invention comprises:
- a washing phase comprising a step of operating the washing heat pump 20 so as to cool said refrigerant and to heat water to be used in the chamber 10 (by means of said first heat exchanger 22), and to heat said refrigerant and to cool/solidify the fluid contained in the tank 30 (by means of the second heat exchanger 24), and
- a subsequent drying phase comprising the steps of absorbing water vapour from the chamber 10 through a process air flow, and cooling/dehumidifying the process air flow downstream of the chamber 10,
wherein the drying phase further comprises a step of pre-cooling/pre-dehumidifying the process air flow after said step of absorbing and before said step of cooling/dehumidifying, wherein said step of pre-cooling/pre-dehumidifying the process air flow comprises thermally connecting it with said tank 30.

Advantageously said drying phase further comprises a step of heating a process air flow and inputting the heated process air flow into said chamber 10.

Advantageously said step of thermally connecting the process air flow with said tank 30 comprises the steps of providing a heat exchanger 32 within the path of said process air flow, and circulating the fluid between the tank 30 and a heat exchanger.

Advantageously, the method further comprises the steps of controlling the fluid flow or the fluid flow rate in said step of circulating, according to one or more of the following criteria:
a) switching the fluid flow on/off based on the process air temperature, preferably at the inlet of the chamber 10, more preferably switching it on if the air at the inlet of chamber 10 raises over a first preselected threshold and switching it off if it falls below a second preselected threshold lower than the first preselected threshold;
b) switching the fluid flow on/off based on the temperature of the water or other fluid within tank 30, preferably switching it off when that temperature has reached a value too high to further contribute to the condensation of the humidity of the process air flow;
c) switching the fluid flow on/off based on the difference between the temperature of the process air at the outlet of the chamber 10 and the temperature of the fluid flow, the latter being preferably measured in the tank or at the inlet of said heat exchanger 32 (sensor 88), more preferably switching it off if the difference of temperature falls below a predetermined threshold;
d) switching the fluid flow on during operation of the washing heat pump 20, in order to move the fluid in the tank 30 and so increase the heat transfer coefficient;
e) in case of a heat pump condense dryer, switching the fluid flow off in a first part of the drying phase, until the dryer heat pump 60 has completed a warm-up phase or transient condition, and after a proper operation time of the dryer heat pump 60 and when eventually the dryer heat pump 60 is operating at full speed, then switching the fluid flow on;
f) in case of a washing-dryer machine 1 using a heat pump condense, switching the fluid flow on/off based on the refrigerant temperature, preferably at the outlet of the condenser 14, more preferably switching it on if the refrigerant at the outlet of condenser 14 raises over a first predetermined threshold, and switching it off if it falls below a second predetermined threshold lower than said first predetermined threshold;
g) in case of a washing-dryer machine 1 using an electric heating element 14, switching the fluid flow on at the beginning of the drying phase;
h) in case of a washing-dryer machine 1 using an electric heating element 14, switching the fluid flow off when the power of the electric heating element 14 is reduced.

In the previous description, a number of controls on a number of components of the washing-dryer machine 1 have been mentioned. It will be understood that all those controls will be preferably performed by a single control unit 80, but also two or more control units can be provided. A driver of an electrovalve 28 is to be considered part of such control unit 80.

Those skilled in the art will understand that several changes, omissions, additions of components may be made to the embodiments disclosed hereinabove without departing from the scope of protection of the present invention as defined by the following claims.

## Claims

1. A washing-dryer machine (1) comprising:
- a chamber (10) for receiving goods to be washed and dried,
- a tank (30) adapted to contain a fluid,
- a washing heat pump (20) comprising a refrigerant, wherein the washing heat pump (20) during a washing phase of the washing-dryer machine (1) is adapted to cool said refrigerant and to heat water to be used in the chamber (10), and to heat said refrigerant and to cool the fluid contained in the tank (30),
- an air cooling/dehumidifier element (12), wherein said air cooling/dehumidifier element (12) during a drying phase of the washing-dryer machine (1) is adapted to cool/dehumidify process air downstream of the chamber (10),
**characterized in that** said tank (30) or a heat exchanger (32) thermally connected with said tank (30) is arranged downstream of said chamber (10) and upstream of said air cooling/dehumidifier element (12), so as to pre-cool/pre-dehumidify process air which exits from the chamber (10) before the pre-cooled/pre-dehumidified process air is introduced into said air cooling/dehumidifier element (12).

2. Washing-dryer machine according to claim 1, wherein said tank (30) is directly inserted within a duct (50) wherein the process air flows.

3. Washing-dryer machine according to claim 2, wherein said tank (30) has corrugated walls and/or fins protruding from the walls, possibly having corrugated surfaces.

4. Washing-dryer machine according to claim 1, wherein an air to liquid heat exchanger (32) is inserted within a duct (50) wherein the process air flows, and wherein a fluid is circulated between said heat exchanger (32) and said tank (30).

5. Washing-dryer machine according to claim 4, wherein said circulated fluid is the fluid contained within tank (30).

6. Washing-dryer machine according to claim 4 or 5, further comprising circulation means (36) for circulating said fluid.

7. Washing-dryer machine according to any of claims 4-6, wherein said air to liquid heat exchanger is a finned coil heat exchanger (32).

8. Washing-dryer machine according to any one of the previous claims, further comprising an air heating element (14) adapted to heat process air upstream of said chamber (10) and downstream of said air cooling/dehumidifier element (12).

9. Washing-dryer machine according to any one of the previous claims, wherein said air cooling/dehumidifier element (12) is an air to air heat exchanger (12) or a water to air heat exchanger (12) configured to cool/dehumidify the process air and to heat ambient air or tap water, respectively.

10. Washing-dryer machine according to any one of claims 8-9, wherein said air heating element (14) is an electric heater.

11. Washing-dryer machine according to claim 8, wherein said air cooling/dehumidifier element (12) and said air heating element (14) are heat exchangers part of a dryer heat pump (60).

12. Washing-dryer machine according to claim 11, wherein said washing heat pump (20) and said dryer heat pump (60) share at least one component.

13. Washing-dryer machine according to any of claims 6-12, comprising a control unit (60) configured to control said circulating means (36) based on one or more of the following criteria:
a) switching said circulating means (36) on/off based on the process air temperature, preferably at the inlet of the chamber (10), more preferably switching it on if the air at the inlet of chamber (10) raises over a first preselected threshold and switching it off if it falls below a second preselected threshold lower than the first preselected threshold;
b) switching said circulating means (36) on/off based on the temperature of the fluid within tank (30), preferably switching it off when that temperature has reached a value too high to further contribute to the condensation of the humidity of the process air flow;
c) switching said circulating means (36) on/off based on the difference between the temperature of the process air at the outlet of the chamber (10) and the temperature of the fluid circulated by said circulating means (36), the latter being preferably measured in the tank or at the inlet of said heat exchanger (32), more preferably switching it off if the difference of temperature falls below a predetermined threshold;
d) switching said circulating means (36) on during operation of the washing heat pump (20), in order to move the fluid in the tank (30) and so increase the heat transfer coefficient;
e) in case of a heat pump condense dryer, switching said circulating means (36) off in a first part of the drying phase, until the dryer heat pump (60) has completed a warm-up phase or transient condition, and after a proper operation time of the dryer heat pump (60) and when eventually the dryer heat pump (60) is operating at full speed, then switching said circulating means (36) on;
f) in case of a washing-dryer machine (1) using a heat pump condense, switching said circulating means (36) on/off based on the refrigerant temperature, preferably at the outlet of the condenser (14), more preferably switching it on if the refrigerant at the outlet of condenser (14) raises over a first predetermined threshold, and switching it off if it falls below a second predetermined threshold lower than said first predetermined threshold;
g) in case of a washing-dryer machine (1) using an electric heating element (14), switching said circulating means (36) on at the beginning of the drying phase;
h) in case of a washing-dryer machine (1) using an electric heating element (14), switching said circulating means (36) off when the power of the electric heating element (14) is reduced.

14. A method of operating a washing-dryer machine (1) comprising a chamber (10) for receiving goods to be washed and dried, a tank (30) adapted to contain a fluid, and a washing heat pump (20) comprising a refrigerant, the method comprising:
- a washing phase comprising a step of operating the washing heat pump (20) so as to cool said refrigerant and to heat water to be used in the chamber (10), and to heat said refrigerant and to cool/solidify the fluid contained in the tank (30), and
- a subsequent drying phase comprising the steps of absorbing water vapour from the chamber (10) through a process air flow, and cooling/dehumidifying the process air flow downstream of the chamber (10), **characterized in that**
the drying phase further comprises a step of pre-cooling/pre-dehumidifying the process air flow after said step of absorbing and before said step of cooling/dehumidifying, wherein said step of pre-cooling/pre-dehumidifying the process air flow comprises thermally connecting it with said tank (30).

15. The method according to claim 14, wherein said drying phase further comprises a step of heating a process air flow and inputting the heated process air flow into said chamber (10).

16. The method according to claim 14 or 15, wherein said step of thermally connecting the process air flow with said tank (30) comprises the steps of providing a heat exchanger (32) within the path of said process air flow, and circulating the fluid between the tank (30) and a heat exchanger (32).

17. The method according to any of claims 14-16, further comprising the steps of controlling the fluid flow or the fluid flow rate in said step of circulating, according to one or more of the following criteria:
a) switching the fluid flow on/off based on the process air temperature, preferably at the inlet of the chamber (10), more preferably switching it on if the air at the inlet of chamber (10) raises over a first preselected threshold and switching it off if it falls below a second preselected threshold lower than the first preselected threshold;
b) switching the fluid flow on/off based on the temperature of the water or other fluid within tank (30), preferably switching it off when that temperature has reached a value too high to further contribute to the condensation of the humidity of the process air flow;
c) switching the fluid flow on/off based on the difference between the temperature of the process air at the outlet of the chamber (10) and the temperature of the fluid flow, the latter being preferably measured in the tank or at the inlet of said heat exchanger (32), more preferably switching it off if the difference of temperature falls below a predetermined threshold;
d) switching the fluid flow on during operation of the washing heat pump (20), in order to move the fluid in the tank (30) and so increase the heat transfer coefficient;
e) in case of a heat pump condense dryer, switching the fluid flow off in a first part of the drying phase, until the dryer heat pump (60) has completed a warm-up phase or transient condition, and after a proper operation time of the dryer heat pump (60) and when eventually the dryer heat pump 60 is operating at full speed, then switching the fluid flow on;
f) in case of a washing-dryer machine (1) using a heat pump condense, switching the fluid flow on/off based on the refrigerant temperature, preferably at the outlet of the condenser (14), more preferably switching it on if the refrigerant at the outlet of condenser (14) raises over a first predetermined threshold, and switching it off if it falls below a second predetermined threshold lower than said first predetermined threshold;
g) in case of a washing-dryer machine (1) using an electric heating element (14), switching the fluid flow on at the beginning of the drying phase;
h) in case of a washing-dryer machine (1) using an electric heating element (14), switching the fluid flow off when the power of the electric heating element (14) is reduced.

## Patentansprüche

1. Waschtrocknermaschine (1), umfassend:
- eine Kammer (10) zur Aufnahme von Dingen, die gewaschen und getrocknet werden sollen,
- einen Tank (30), der zum Enthalten eines Fluids ausgelegt ist,
- eine Waschwärmepumpe (20), umfassend ein Kältemittel, wobei die Waschwärmepumpe (20) während einer Waschphase der Waschtrocknermaschine (1) zum Kühlen des Kältemittels und zum Erwärmen des Wassers, das in der Kammer (10) verwendet werden soll, und zum Erwärmen des Kältemittels und zum Kühlen des Fluids, das in dem Tank (30) enthalten ist, ausgelegt ist,
- ein Luftkühlungs-/-entfeuchtungselement (12), wobei das Luftkühlungs-/-entfeuchtungselement (12) während einer Trocknungsphase der Waschtrocknermaschine (1) zum Kühlen/Entfeuchten von Prozessluft stromabwärts der Kammer (10) ausgelegt ist,
**dadurch gekennzeichnet, dass** der Tank (30) oder ein Wärmetauscher (32), der thermisch mit dem Tank (30) verbunden ist, stromabwärts der Kammer (10) und stromaufwärts des Luftkühlungs-/-entfeuchtungselements (12) angeordnet ist, um die Prozessluft vorzukühlen/vorzuentfeuchten, die aus der Kammer (10) austritt, bevor die vorgekühlte/vorentfeuchtete Prozessluft in das Luftkühlungs-/-entfeuchtungselement (12) eingeleitet wird.

2. Waschtrocknermaschine nach Anspruch 1, wobei der Tank (30) direkt in einen Kanal (50) eingeführt ist, worin die Prozessluft strömt.

3. Waschtrocknermaschine nach Anspruch 2, wobei der Tank (30) gewellte Wände und/oder Rippen, die von den Wänden vorstehen, aufweist, die, wenn möglich, gewellte Oberflächen aufweisen.

4. Waschtrocknermaschine nach Anspruch 1, wobei ein Luft-Flüssigkeit-Wärmetauscher (32) in eine Leitung (50) eingeführt wird, in der Prozessluft strömt, und wobei ein Fluid zwischen dem Wärmetauscher (32) und dem Tank (30) zirkuliert.

5. Waschtrocknermaschine nach Anspruch 4, wobei das zirkulierte Fluid das Fluid ist, das in dem Tank (30) enthalten ist.

6. Waschtrocknermaschine nach Anspruch 4 oder 5, ferner umfassend Zirkulationsmittel (36) zum Zirkulieren des Fluids.

7. Waschtrocknermaschine nach einem der Ansprüche 4 bis 6, wobei der Luft-Flüssigkeit-Wärmetauscher ein Lamellenelement-Wärmetauscher (32) ist.

8. Waschtrocknermaschine nach einem der vorhergehenden Ansprüche, ferner umfassend ein Lufterwärmungselement (14), das zum Erwärmen von Prozessluft stromaufwärts der Kammer (10) und stromabwärts des Luftkühlungs-/-entfeuchtungselements (12) ausgelegt ist.

9. Waschtrocknermaschine nach einem der vorhergehenden Ansprüche, wobei das Luftkühlungs-/-entfeuchtungselement (12) ein Luft-Luft-Wärmetauscher (12) oder ein Wasser-Luft-Wärmetauscher (12) ist, der zum Kühlen/Entfeuchten der Prozessluft und zum Erwärmen von Umgebungsluft bzw. Leitungswasser konfiguriert ist.

10. Waschtrocknermaschine nach einem der Ansprüche 8 bis 9, wobei das Lufterwärmungselement (14) eine elektrische Heizung ist.

11. Waschtrocknermaschine nach Anspruch 8, wobei das Luftkühlungs-/ -entfeuchtungselement (12) und das Lufterwärmungselement (14) Wärmetauscher sind, die Teil einer Trocknerwärmepumpe (60) sind.

12. Waschtrocknermaschine nach Anspruch 11, bei dem die Waschwärmepumpe (20) und die Trocknerwärmepumpe (60) mindestens eine Komponente gemeinsam nutzen.

13. Waschtrocknermaschine nach einem der Ansprüche 6 bis 12, umfassend eine Steuereinheit (60), die zum Steuern der Zirkulationsmittel (36) basierend auf einem oder mehreren der folgenden Kriterien konfiguriert ist:
a) Ein-/Ausschalten der Zirkulationsmittel (36) basierend auf der Prozesslufttemperatur, vorzugsweise am Einlass der Kammer (10), bevorzugter Einschalten davon, wenn die Luft am Einlass der Kammer (10) über einen ersten vorgewählten Schwellenwert steigt, und Ausschalten davon, wenn diese unter einen zweiten vorgewählten Schwellenwert fällt, der niedriger als der erste vorgewählte Schwellenwert ist;
b) Ein-/Ausschalten der Zirkulationsmittel (36) basierend auf der Temperatur des Fluids in dem Tank (30), vorzugsweise Ausschalten davon, wenn die Temperatur einen Wert erreicht, der zu hoch ist, um weiterhin zur Kondensation der Feuchtigkeit der Prozessluftströmung beizutragen;
c) Ein-/Ausschalten der Zirkulationsmittel (36) basierend auf der Differenz zwischen der Temperatur der Prozessluft am Auslass der Kammer (10) und der Temperatur des Fluids, das von den Zirkulationsmitteln (36) zirkuliert wird, wobei letztere vorzugsweise in dem Tank oder am Einlass des Wärmetauschers (32) gemessen wird, mehr bevorzugt Ausschalten davon, wenn die Temperaturdifferenz unter einen vorbestimmten Schwellenwert fällt;
d) Einschalten der Zirkulationsmittel (36) während des Betriebs des Waschwärmepumpe (20), um die Flüssigkeit in den Tank (30) zu bewegen und so den Wärmeübergangskoeffizienten zu erhöhen;
e) im Falle eines Wärmepumpen-Kondensationstrockners, Ausschalten der Zirkulationsmittel (36) in einem ersten Teil der Trocknungsphase, bis die Trocknerwärmepumpe (60) eine Aufwärmphase oder einen Übergangszustand abgeschlossen hat, und nach einer angemessenen Betriebszeit der Trocknerwärmepumpe (60) und, wenn schließlich die Trocknerwärmepumpe (60) bei voller Drehzahl arbeitet, Einschalten der Zirkulationsmittel (36);
f) im Falle einer Waschtrocknermaschine (1) mit Wärmepumpenkondensator, Ein-/Ausschalten der Zirkulationsmittel (36) basierend auf der Kältemitteltemperatur, vorzugsweise am Auslass des Kondensators (14), bevorzugter Einschalten davon, wenn das Kältemittel am Auslass des Kondensators (14) über einen ersten vorbestimmten Schwellenwert ansteigt, und Ausschalten davon, wenn es unter einen zweiten vorbestimmten Schwellenwert fällt, der niedriger als der erste vorbestimmte Schwellenwert ist;
g) im Falle einer Waschtrocknermaschine (1), das ein elektrisches Heizelement (14) verwendet, Einschalten der Zirkulationsmittel (36) zu Beginn der Trocknungsphase;
h) im Falle einer Waschtrocknermaschine (1), das ein elektrisches Heizelement (14) verwendet, Ausschalten der Zirkulationsmittel (36), wenn sich die Leistung des elektrischen Heizelements (14) verringert.

14. Verfahren zum Betreiben einer Waschtrocknermaschine (1), umfassend eine Kammer (10) zum Aufnahmen von Dingen, die gewaschen und getrocknet werden sollen, einen Tank (30), der zum Enthalten eines Fluids ausgelegt ist, und eine Waschwärmepumpe (20), die ein Kältemittel umfasst, wobei das Verfahren umfasst:
- eine Waschphase, umfassend einen Schritt des Betreibens der Waschwärmepumpe (20), um das Kältemittel zu kühlen und Wasser zu erwärmen, das in der Kammer (10) verwendet werden soll, und um das Kältemittel zu erwärmen und um das Fluid, das in dem Tank (30) enthalten ist, zu kühlen/zu verfestigen, und
- eine nachfolgende Trocknungsphase, umfassend die Schritte des Absorbierens von Wasserdampf aus der Kammer (10) durch eine Prozessluftströmung und des Kühlens/Entfeuchtens der Prozessluftströmung stromabwärts der Kammer (10), **dadurch gekennzeichnet, dass** die Trocknungsphase ferner einen Schritt des Vorkühlens/Vorentfeuchtens der Prozessluftströmung nach dem Schritt des Absorbierens und vor dem Schritt des Kühlens/Entfeuchtens umfasst, wobei der Schritt des Vorkühlens/Vorentfeuchtens der Prozessluftströmung das thermische Verbinden davon mit dem Tank (30) umfasst.

15. Verfahren nach Anspruch 14, wobei die Trocknungsphase ferner einen Schritt des Erwärmens einer Prozessluftströmung und des Einleitens der erwärmten Prozessluftströmung in die Kammer (10) umfasst.

16. Verfahren nach Anspruch 14 oder 15, wobei der Schritt des thermischen Verbindens der Prozessluftströmung mit dem Tank (30) die Schritte des Bereitstellens eines Wärmetauschers (32) innerhalb der Strecke der Prozessluftströmung, und des Zirkulierens des Fluids zwischen dem Tank (30) und einem Wärmetauscher (32) umfasst.

17. Verfahren nach einem der Ansprüche 14 bis 16, ferner umfassend die Schritte des Steuerns der Fluidströmung oder der Fluidströmungsrate in dem Schritt des Zirkulierens gemäß einem oder mehreren der folgenden Kriterien:
a) Ein-/Ausschalten der Fluidströmung basierend auf der Prozesslufttemperatur, vorzugsweise am Einlass der Kammer (10), mehr bevorzugt Einschalten davon, wenn die Luft am Einlass der Kammer (10) über einen ersten vorbestimmten Schwellenwert ansteigt, und Ausschalten davon, wenn sie unter einen zweiten vorbestimmten Schwellenwert fällt, der niedriger als der erste vorbestimmte Schwellenwert ist;
b) Ein-/Ausschalten der Fluidströmung basierend auf der Temperatur des Wassers oder anderen Fluids in dem Tank (30), vorzugsweise Ausschalten davon, wenn die Temperatur einen Wert erreicht hat, der zu hoch ist, um weiterhin zur Kondensation der Feuchtigkeit der Prozessluftströmung beizutragen;
c) Ein-/Ausschalten der Fluidströmung basierend auf der Differenz zwischen der Temperatur der Prozessluft am Auslass der Kammer (10) und der Temperatur der Fluidströmung, wobei letztere vorzugsweise in dem Tank oder am Einlass des Wärmetauschers (32) gemessen wird, mehr bevorzugt Ausschalten davon, wenn die Temperaturdifferenz unter einen vorbestimmten Schwellenwert fällt;
d) Einschalten der Fluidströmung während des Betriebs der Waschwärmepumpe (20), um die Flüssigkeit in den Tank (30) zu bewegen und so den Wärmeübergangskoeffizienten zu erhöhen;
e) im Falle einer Wärmepumpen-Kondensationstrockners, Ausschalten der Fluidströmung in einem ersten Teil der Trocknungsphase, bis die Trocknerwärmepumpe (60) eine Aufwärmphase oder einen Übergangszustand abgeschlossen hat, und nach einer angemessenen Betriebszeit der Trocknerwärmepumpe (60) und, wenn schließlich die Trocknerwärmepumpe (60) bei voller Drehzahl arbeitet, Einschalten der Fluidströmung;
f) im Falle einer Waschtrocknermaschine (1), die einen Wärmepumpenkondensator verwendet, Ein-/Ausschalten der Fluidströmung basierend auf der Kältemitteltemperatur, vorzugsweise am Auslass des Kondensators (14), bevorzugter Einschalten davon, wenn das Kältemittel am Auslass des Kondensators (14) über einen ersten vorbestimmten Schwellenwert ansteigt, und Ausschalten davon, wenn es unter einen zweiten vorbestimmten Schwellenwert fällt, der niedriger als der erste vorbestimmte Schwellenwert ist;
g) im Falle einer Waschtrocknermaschine (1), die ein elektrisches Heizelement (14) verwendet, Einschalten der Fluidströmung zu Beginn der Trocknungsphase;
h) im Falle einer Waschtrocknermaschine (1), die ein elektrisches Heizelement (14) verwendet, Ausschalten der Fluidströmung, wenn sich die Leistung des elektrischen Heizelements (14) verringert.

## Revendications

1. Lave-linge séchant (1) comprenant :
- une cuve (10) destinée à recevoir des articles à laver et à sécher,
- un réservoir (30) adapté pour contenir un fluide,
- une pompe à chaleur de lavage (20) comprenant un réfrigérant, la pompe à chaleur de lavage (20) étant adaptée pour refroidir ledit réfrigérant durant une phase de lavage du lave-linge séchant (1), et pour chauffer l'eau destinée à être utilisée dans la cuve (10), et pour chauffer ledit réfrigérant et refroidir le fluide contenu dans le réservoir (30),
- un élément refroidisseur/déshumidificateur d'air (12), ledit élément refroidisseur/déshumidificateur d'air (12) étant adapté pour refroidir/déshumidifier l'air de traitement en aval de la cuve (10) durant une phase de séchage du lave-linge séchant (1),
**caractérisé en ce que** ledit réservoir (30) ou un échangeur de chaleur (32) thermiquement relié audit réservoir (30) est agencé en aval de ladite cuve (10) et en amont dudit élément refroidisseur/déshumidificateur d'air (12), de manière à pré-refroidir/pré-déshumidifier l'air de traitement sortant de la cuve (10) avant l'introduction de l'air de traitement pré-refroidi/pré-déshumidifié dans ledit élément refroidisseur/déshumidificateur d'air (12).

2. Lave-linge séchant selon la revendication 1, dans lequel ledit réservoir (30) est inséré directement à l'intérieur d'un conduit (50) dans lequel circule l'air de traitement.

3. Lave-linge séchant selon la revendication 2, dans lequel ledit réservoir (30) comporte des parois ondulées et/ou des ailettes faisant saillie sur les parois, éventuellement avec des surfaces ondulées.

4. Lave-linge séchant selon la revendication 1, dans lequel un échangeur de chaleur air-liquide (32) est inséré à l'intérieur d'un conduit (50) dans lequel circule l'air de traitement, et dans lequel un fluide circule entre ledit échangeur de chaleur (32) et ledit réservoir (30).

5. Lave-linge séchant selon la revendication 4, dans lequel ledit fluide en circulation est le fluide contenu à l'intérieur du réservoir (30).

6. Lave-linge séchant selon la revendication 4 ou 5, comprenant en outre un moyen de circulation (36) pour faire circuler ledit fluide.

7. Lave-linge séchant selon l'une quelconque des revendications 4-6, dans lequel ledit échangeur de chaleur air-liquide est un échangeur de chaleur à bobine à ailettes (32).

8. Lave-linge séchant selon l'une quelconque des revendications précédentes, comprenant en outre un élément chauffant l'air (14) adapté pour chauffer l'air de traitement en amont de ladite cuve (10) et en aval dudit élément refroidisseur/déshumidificateur d'air (12).

9. Lave-linge séchant selon l'une quelconque des revendications précédentes, dans lequel ledit élément refroidisseur/déshumidificateur d'air (12) est un échangeur de chaleur air-air (12) ou un échangeur de chaleur eau-air (12), configuré pour refroidir/déshumidifier l'air de traitement et pour chauffer de l'air ambiant ou de l'eau du robinet, respectivement.

10. Lave-linge séchant selon l'une quelconque des revendications 8-9, dans lequel ledit élément chauffant l'air (14) est un système de chauffage électrique.

11. Lave-linge séchant selon la revendication 8, dans lequel ledit échangeur de chaleur (32) et ledit élément chauffant l'air (14) sont des échangeurs de chaleur faisant partie d'une pompe à chaleur de séchage (60).

12. Lave-linge séchant selon la revendication 11, dans lequel ladite pompe à chaleur de lavage (20) et ladite pompe à chaleur de séchage (60) partagent au moins un composant.

13. Lave-linge séchant selon l'une quelconque des revendications 6-12, comprenant une unité de contrôle (60) configurée pour contrôler ledit moyen de circulation (36) sur la base d'un ou de plusieurs des critères suivantes :
a) mise en marche/arrêt dudit moyen de circulation (36) sur la base de la température de l'air de traitement, de préférence à l'entrée de la cuve (10), et plus préférentiellement, mise en marche si l'air à l'entrée de la cuve (10) s'élève au-dessus d'un premier seuil présélectionné, et arrêt s'il tombe en dessous d'un deuxième seuil présélectionné inférieur au premier seuil présélectionné ;
b) mise en marche/arrêt dudit moyen de circulation (36) sur la base de la température du fluide à l'intérieur du réservoir (30), de préférence arrêt lorsque cette température a atteint une valeur trop élevée pour contribuer encore à la condensation de l'humidité du flux d'air de traitement ;
c) mise en marche/arrêt dudit moyen de circulation (36) sur la base de la différence entre la température de l'air de traitement à la sortie de la cuve (10) et la température du fluide mis en circulation par ledit moyen de circulation (36), cette dernière étant de préférence mesurée dans le réservoir ou à l'entrée dudit échangeur de chaleur (32), et plus préférentiellement, arrêt si la différence de température tombe en dessous d'un seuil prédéterminé ;
d) mise en marche dudit moyen de circulation (36) durant le fonctionnement de la pompe à chaleur de lavage (20), afin de déplacer le fluide dans le réservoir (30) de manière à augmenter le coefficient de transfert de chaleur ;
e) dans le cas d'un sèche-linge à condensation par pompe à chaleur, arrêt dudit moyen de circulation (36) durant une première partie de la phase de séchage, jusqu'à ce que la pompe à chaleur de séchage (60) termine une phase de chauffage ou sorte d'un état transitoire, et après un temps de fonctionnement correct de la pompe à chaleur de séchage (60), et éventuellement lorsque la pompe à chaleur de séchage (60) fonctionne à la vitesse maximale, puis mise en marche dudit moyen de circulation (36) ;
f) dans le cas d'un lave-linge séchant (1) à condensation par pompe à chaleur, mise en marche/arrêt dudit moyen de circulation (36) sur la base de la température du réfrigérant, de préférence à la sortie du condenseur (14), et plus préférentiellement, mise en marche si le réfrigérant à la sortie du condenseur (14) s'élève au-dessus d'un premier seuil prédéterminé, et arrêt s'il tombe en dessous d'un deuxième seuil prédéterminé inférieur audit premier seuil prédéterminé ;
g) dans le cas d'un lave-linge séchant (1) employant un élément de chauffage électrique (14), mise en marche dudit moyen de circulation (36) au début de la phase de séchage ;
h) dans le cas d'un lave-linge séchant (1) employant un élément de chauffage électrique (14), arrêt dudit moyen de circulation (36) lorsque la puissance de l'élément de chauffage électrique (14) est réduite.

14. Procédé pour le fonctionnement d'un lave-linge séchant (1) comprenant une cuve (10) destinée à recevoir des articles à laver et à sécher, un réservoir (30) adapté pour contenir un fluide, et une pompe à chaleur de lavage (20) comprenant un réfrigérant, le procédé comprenant :
- une phase de lavage comprenant une étape de fonctionnement de la pompe à chaleur de lavage (20) de manière à refroidir ledit réfrigérant et à chauffer de l'eau destinée à être utilisée dans la cuve (10), et à chauffer ledit réfrigérant et refroidir/solidifier le fluide contenu dans le réservoir (30), et
- une phase de séchage consécutive, comprenant les étapes d'absorption de vapeur d'air à partir de la cuve (10) au moyen d'un flux d'air de traitement, et de refroidissement/déshumidification du flux d'air de traitement en aval de la cuve (10), **caractérisé en ce que**
la phase de séchage comprend une étape de pré-refroidissement/pré-déshumidification du flux d'air de traitement après ladite étape d'absorption et avant ladite étape de refroidissement/déshumidification, ladite étape de pré-refroidissement/pré-déshumidification du flux d'air de traitement comprenant le raccordement thermique audit réservoir (30).

15. Procédé selon la revendication 14, dans lequel ladite phase de séchage comprend en outre une étape de chauffage d'un flux d'air de traitement et l'introduction du flux d'air de traitement chauffé dans ladite cuve (10).

16. Procédé selon la revendication 14 ou 15, dans lequel ladite étape de raccordement thermique du flux d'air de traitement audit réservoir (30) comprend les étapes de mise à disposition d'un échangeur de chaleur (32) sur le trajet dudit flux d'air de traitement, et de mise en circulation du fluide entre le réservoir (30) et l'échangeur de chaleur (32).

17. Procédé selon l'une quelconque des revendications 14-16, comprenant en outre les étapes de contrôle du flux de fluide ou du débit de fluide dans ladite étape de mise en circulation, selon l'un ou plusieurs des critères suivants :
a) mise en marche/arrêt du flux de fluide sur la base de la température de l'air de traitement, de préférence à l'entrée de la cuve (10), et plus préférentiellement, mise en marche si l'air à l'entrée de la cuve (10) s'élève au-dessus d'un premier seuil présélectionné, et arrêt s'il tombe en dessous d'un deuxième seuil présélectionné inférieur au premier seuil présélectionné ;
b) mise en marche/arrêt du flux de fluide sur la base de la température du fluide à l'intérieur du réservoir (30), de préférence arrêt lorsque cette température a atteint une valeur trop élevée pour contribuer encore à la condensation de l'humidité du flux d'air de traitement ;
c) mise en marche/arrêt du flux de fluide sur la base de la différence entre la température de l'air de traitement à la sortie de la cuve (10) et la température du fluide mis en circulation par ledit moyen de circulation (36), cette dernière étant de préférence mesurée dans le réservoir ou à l'entrée dudit échangeur de chaleur (32), et plus préférentiellement, arrêt si la différence de température tombe en dessous d'un seuil prédéterminé ;
d) mise en marche du flux de fluide durant le fonctionnement de la pompe à chaleur de lavage (20), afin de déplacer le fluide dans le réservoir (30) de manière à augmenter le coefficient de transfert de chaleur ;
e) dans le cas d'un sèche-linge à condensation par pompe à chaleur, arrêt du flux de fluide durant une première partie de la phase de séchage, jusqu'à ce que la pompe à chaleur de séchage (60) termine une phase de chauffage ou sorte d'un état transitoire, et après un temps de fonctionnement correct de la pompe à chaleur de séchage (60), et éventuellement lorsque la pompe à chaleur de séchage (60) fonctionne à la vitesse maximale, puis mise en marche dudit flux de fluide ;
f) dans le cas d'un lave-linge séchant (1) à condensation par pompe à chaleur, mise en marche/arrêt du flux de fluide sur la base de la température du réfrigérant, de préférence à la sortie du condenseur (14), et mieux, mise en marche si le réfrigérant à la sortie du condenseur (14) s'élève au-dessus d'un premier seuil prédéterminé, et arrêt s'il tombe en dessous d'un deuxième seuil prédéterminé inférieur audit premier seuil prédéterminé ;
g) dans le cas d'un lave-linge séchant (1) employant un élément de chauffage électrique (14), mise en marche du flux de fluide au début de la phase de séchage ;
h) dans le cas d'un lave-linge séchant (1) employant un élément de chauffage électrique (14), arrêt du flux de fluide lorsque la puissance de l'élément de chauffage électrique (14) est réduite.
